# FASCICULE DE BREVET EUROPEEN

(11) **EP 3 365 545 B1**
(45) Date de publication et mention de la délivrance du brevet: **18.09.2019**
(21) Numéro de dépôt: 16809118.9
(22) Date de dépôt: 21.10.2016
(51) Int. Cl.: F02C 7/224, F02C 7/236

(54) **RECIRCULATION DE FLUIDE À TRAVERS UNE POMPE CENTRIFUGE DE TURBOMACHINE**
RÜCKFÜHRUNG VON FLÜSSIGKEIT DURCH EINE TURBOMASCHINENKREISELPUMPE
RECIRCULATION OF FLUID THROUGH A TURBOMACHINE CENTRIFUGAL PUMP

(30) Priorité: 23.10.2015 FR 1560137
(43) Date de publication de la demande: 29.08.2018
(73) Titulaire: Safran Aircraft Engines, 75015 Paris (FR)
(72) Inventeur: CHALAUD, Sébastien Christophe, 77550 Moissy-cramayel (FR)
(74) Mandataire: Brevalex
(86) Numéro de dépôt international: PCT/FR2016/052732
(87) Numéro de publication internationale: WO 2017/068299

(56) Documents cités:
- US-A- 5 116 362
- US-A1- 2003 136 103
- US-A1- 2014 219 826

## Description

### DOMAINE TECHNIQUE

L'invention se rapporte au domaine technique général des systèmes d'alimentation en fluide tel que du carburant ou du lubrifiant. Plus précisément, l'invention concerne la recirculation de fluide pour le réchauffer.

### ÉTAT DE LA TECHNIQUE ANTÉRIEURE

Un système d'alimentation en carburant pour turbomachine, de conception connue, comprend une pompe basse pression et une pompe volumétrique haute pression en aval de la pompe basse pression. Cette pompe volumétrique haute pression est configurée pour délivrer un débit de carburant constant en direction d'une chambre de combustion de la turbomachine.

Le système d'alimentation comporte une boucle de recirculation de carburant permettant de relier fluidiquement la sortie de la pompe volumétrique à l'entrée de la pompe volumétrique, pour faire circuler un excès de carburant vers l'entrée de la pompe volumétrique.

Le carburant se réchauffe lorsqu'il est recirculé. Néanmoins, le débit de carburant dans la boucle de recirculation est sensiblement indépendant de la température du carburant. Or, le carburant circulant dans le système d'alimentation nécessite parfois d'être réchauffé, notamment lorsque la turbomachine est à haute altitude ou par grand froid.

US 2003/136103 divulgue un système d'alimentation, en carburant de structure connue.

Il existe donc un besoin pour réchauffer du carburant, tout en limitant les pertes de puissance dans le système d'alimentation.

### EXPOSÉ DE L'INVENTION

L'invention vise à résoudre au moins partiellement les problèmes rencontrés dans les solutions de l'art antérieur.

A cet égard, l'invention a pour objet un système d'alimentation de turbomachine en fluide. Le système d'alimentation comprend au moins trois pompes centrifuges en série, et une pompe volumétrique située en aval d'au moins une des pompes centrifuges et configurée pour alimenter en fluide un système d'injection. Le système d'alimentation comprend un groupe de pompage basse pression comprenant au moins deux des pompes centrifuges en séries, le groupe de pompage basse pression étant situé en amont de la pompe volumétrique de manière à alimenter la pompe volumétrique en fluide.

Les pompes centrifuges, contrairement aux pompes volumétriques, sont des pompes cinétiques c'est-à-dire que la pression de sortie est générée par l'énergie cinétique du fluide mis en mouvement par la pompe. La catégorie des pompes cinétiques comprend essentiellement les pompes centrifuges. Dans ce qui suit, le terme « pompe centrifuge » est utilisé pour désigner non seulement les pompes centrifuges au sens strict commun mais également toute pompe cinétique.

Le système d'alimentation se subdivise à un noeud d'entrée, situé en aval du groupe de pompage basse pression, en un circuit d'alimentation de système d'injection et en un circuit d'alimentation des géométries variables, le circuit d'alimentation de système d'injection comprenant la pompe volumétrique et étant configuré pour alimenter en fluide le système d'injection.

Selon l'invention, le circuit d'alimentation des géométries variables comprend un groupe de pompage complémentaire comprenant une pompe centrifuge dite première pompe centrifuge et des géométries variables en aval de la première pompe centrifuge, et le système d'alimentation comprend une branche de recirculation de fluide qui comporte :
une entrée située entre la première pompe centrifuge et les géométries variables,
une sortie située en amont de la première pompe centrifuge, ou en aval des géométries variables et en communication fluidique avec un noeud de sortie du circuit d'alimentation des géométrie variables, le noeud de sortie étant situé en amont de la première pompe centrifuge, de façon à ce qu'au moins une partie du fluide transitant dans la branche de recirculation recircule dans la première pompe centrifuge, et
une vanne située entre l'entrée et la sortie de la branche de recirculation de fluide, la vanne comprenant un obturateur configuré pour s'ouvrir/se fermer en fonction de la température du fluide.

La vanne permet de recirculer davantage de fluide lorsque sa température est anormalement basse, pour le réchauffer. De plus, la vanne se ferme pour limiter la recirculation du fluide lorsque la température du fluide est suffisamment élevée, ce qui permet de réduire les pertes de puissance dans le système d'alimentation.

La vanne offre la possibilité de chauffer le carburant pour atteindre une température prédéterminée, notamment afin d'améliorer le rendement de combustion en injectant du carburant chaud. Cette flexibilité n'est pas permise pas les échangeurs huile-carburant et/ou les échangeurs air-huile.

Le fluide dans le système d'alimentation est notamment de l'huile ou du carburant.

L'invention peut comporter de façon facultative une ou plusieurs des caractéristiques suivantes combinées entre elles ou non.

De préférence, le groupe de pompage basse pression et/ou le circuit d'alimentation des géométries variables sont dépourvus de pompe volumétrique.

De préférence, le circuit amont est également dépourvu de pompe volumétrique.

De préférence, le groupe de pompage basse pression est constitué d'une pluralité de pompes centrifuges en série. Le groupe de pompage basse pression comprend préférablement entre deux et cinq pompes centrifuges.

Selon une autre particularité de réalisation, le noeud de sortie est situé entre deux pompes du groupe de pompage basse pression ou bien en amont du groupe de pompage basse pression.

En variante et selon une autre particularité de réalisation, le noeud de sortie est situé entre le groupe de pompage basse pression et la première pompe centrifuge ou à la fois en aval du groupe de pompage basse pression et en amont de la pompe volumétrique.

Avantageusement, la vanne comprend au moins un élément choisi parmi un clapet anti-retour, une soupape, une fourrure et un tiroir.

Selon une forme de réalisation avantageuse, l'ouverture et/ou la fermeture de l'obturateur de la vanne est commandée par un système électronique de régulation de turbomachine, ou bien la vanne est configurée de manière à ce que l'obturateur se ferme automatiquement si la température du fluide traversant la vanne dépasse une valeur seuil.

Selon une particularité de réalisation, l'obturateur comprend seulement deux positions stables, une position extrême d'ouverture dans laquelle la vanne laisse circuler du fluide dans la branche de recirculation et une position extrême de fermeture dans laquelle la vanne empêche la circulation de fluide dans la branche de recirculation.

De préférence, la pompe haute pression est une pompe volumétrique à engrenages configurée pour être entraînée mécaniquement par une boite de transmission de turbomachine.

En variante, la pompe volumétrique haute pression est de préférence une pompe électrique commandée par un système électronique de régulation de la turbomachine.

L'invention se rapporte aussi à une turbomachine pour aéronef comprenant un système d'alimentation en fluide tel que défini ci-dessus.

L'invention a également trait à une turbomachine comprenant un réducteur différentiel configuré pour entraîner en rotation au moins une hélice et destiné à être alimenté en lubrifiant par le système d'alimentation tel que défini ci-dessus. Dans ce cas, la turbomachine est par exemple une turbomachine à ensemble d'hélices contrarotatives non carénées, également connue sous le nom d'« Open Rotor ».

### BRÈVE DESCRIPTION DES DESSINS

La présente invention sera mieux comprise à la lecture de la description d'exemples de réalisation, donnés à titre purement indicatif et nullement limitatif, en faisant référence aux dessins annexés sur lesquels :
- la figure 1 est une vue schématique partielle d'un système d'alimentation en carburant de turbomachine d'aéronef, selon un premier mode de réalisation qui ne fait pas partie de l'invention ;
- la figure 2 est une représentation schématique partielle d'un système d'alimentation en fluide de turbomachine, selon un deuxième mode de réalisation de l'invention ;
- la figure 3 est une représentation schématique partielle d'un système d'alimentation en fluide de turbomachine, selon un troisième mode de réalisation de l'invention,
- la figure 4 est une représentation schématique partielle d'un système d'alimentation en fluide pour turbomachine, selon un quatrième mode de réalisation de l'invention.

### EXPOSÉ DÉTAILLÉ DE MODES DE RÉALISATION PARTICULIERS

Des parties identiques, similaires ou équivalentes des différentes figures portent les mêmes références numériques de façon à faciliter le passage d'une figure à l'autre.

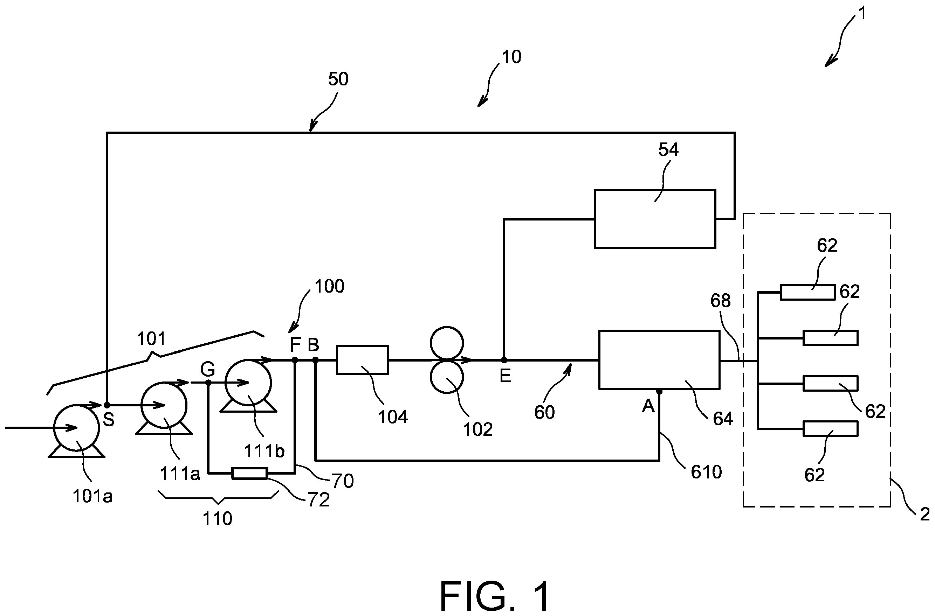

La figure 1 représente un système d'alimentation 10 de turbomachine 1 d'aéronef en fluide. Dans le mode de réalisation décrit, le fluide est du carburant. La turbomachine est une turbomachine 1 d'aéronef tel qu'un turboréacteur ou un turbopropulseur.

Néanmoins, lorsque la turbomachine 1 comprend un réducteur différentiel (non représenté) configuré pour entraîner en rotation au moins une hélice, le fluide peut également être du lubrifiant, typiquement de l'huile.

Le système d'alimentation 10 comprend un circuit amont 100 et un circuit aval 50, 60. Le circuit aval 50, 60 est raccordé au circuit amont 100 en aval du circuit amont 100, au niveau d'un noeud E. Les termes « amont » et « aval » sont définis en référence à la direction générale d'écoulement du carburant dans le système d'alimentation 10 en direction de la chambre de combustion 2.

Le circuit amont 100 comprend un groupe de pompage basse pression 101, une pompe volumétrique haute pression 102, et une résistance hydraulique 104 disposée entre le groupe de pompage basse pression 101 et la pompe volumétrique 102.

Le terme « résistance hydraulique » sert à définir dans ce document, par analogie avec le domaine de l'électricité, la grandeur issue du rapport entre la différence de pression de fluide entre l'entrée et la sortie d'un élément du système d'alimentation sur le débit de fluide traversant l'élément. Par métonymie et toujours par analogie avec le domaine de l'électricité, le terme « résistance hydraulique » sert également à désigner un élément du système d'alimentation caractérisé par cette grandeur. La résistance hydraulique 104 du circuit amont 100 comprend par exemple un échangeur, un filtre à carburant, une vanne de coupure et /ou un débitmètre.

Le circuit aval 50, 60 comporte un circuit d'alimentation des géométries variables 50, et un circuit d'alimentation de système d'injection 60 destiné à alimenter des systèmes d'injection 62 de la chambre de combustion 2.

Le groupe de pompage basse pression 101 comprend une pluralité de pompes centrifuges 101a, 111a, 111b en série. Dans le mode de réalisation représenté à la figure 1, le groupe de pompage basse pression 101 est constitué de trois pompes centrifuges 101a, 111a, 111b en série et côte à côte, de manière à former un bloc de pompage.

Le groupe de pompage basse pression 101 augmente la pression de carburant s'écoulant en direction du circuit aval 50, 60. Il est notamment configuré pour gaver suffisamment la pompe volumétrique haute pression 102, c'est-à-dire pour empêcher les risques de cavitation à l'intérieur de cette pompe 102.

Le groupe de pompage basse pression 101 avec plusieurs pompes centrifuges augmente davantage la pression du fluide en direction de la pompe haute pression 102 qu'une seule pompe centrifuge.

La pompe haute pression 102 est une pompe volumétrique à engrenages configurée pour être entraînée mécaniquement par une boite de transmission de turbomachine 1. Elle délivre un débit de carburant déterminé en fonction du régime de rotation moteur, ce débit étant donc constant à un régime moteur donné.

Le circuit amont 100 comporte également une branche de recirculation 70. L'entrée F de la branche de recirculation 70 est située entre le groupe de pompage basse pression 101 et ia pompe volumétrique 102. La sortie G de la branche de recirculation est située entre deux pompes 111a et 111b du groupe de pompage basse pression 101.

La branche de recirculation 70 comprend une vanne 72 entre son entrée F et sa sortie G. Dans le présent document, le terme « vanne » a notamment un sens large pour couvrir un dispositif susceptible de modifier/faire varier le débit de fluide dans la branche de recirculation.

La vanne 72 comprend un obturateur configuré pour s'ouvrir/se fermer en fonction de la température du carburant. Elle comprend au moins un élément choisi parmi un clapet anti-retour, une soupape, une fourrure et un tiroir. La température du carburant est prélevée dans la vanne 72 ou dans la branche de recirculation 70 à proximité de la vanne 72.

Par prélèvement de température, on entend une mesure de la température par tout moyen adapté, ou encore la mise en place d'un dispositif qui prélève des calories au carburant pour modifier la position de l'obturateur.

Dans le premier mode de réalisation, la vanne 72 est une vanne passive qui prélève des calories au carburant. Elle comprend par exemple une cire dont la température de fusion est proche d'une valeur seuil S₀, de manière à ce que le changement d'état de la cire modifie la position de l'obturateur.

L'obturateur de la vanne 72 s'ouvre automatiquement lorsque la température du carburant devient inférieure à la valeur seuil S₀, c'est-à-dire lorsque la cire se solidifie dans l'exemple de vanne passive ci-dessus. Il se ferme automatiquement lorsque la température du carburant devient supérieure à la valeur seuil S₀, c'est-à-dire par exemple lorsque la cire se liquéfie. L'obturateur s'ouvre/se ferme alors automatiquement, c'est-à-dire sans intervention d'un système de commande.

L'ouverture de l'obturateur permet de faire recirculer du carburant réchauffé à travers la pompe centrifuge 111b, puisque le carburant qui s'est réchauffé dans les conduits de la branche de recirculation 70 est réinjecté dans la pompe centrifuge 111b.

Le circuit d'alimentation 50 des géométries variables et le circuit d'alimentation 60 des systèmes d'injection 62 se séparent au niveau du noeud d'entrée E qui fait la jonction entre le circuit amont 100 et le circuit aval 50, 60.

Dans le système d'alimentation de système d'injection 60, la chambre de combustion 2 est alimentée en carburant par des injecteurs de carburant qui coopèrent avec des systèmes d'injection 62.

Le circuit d'alimentation 60 des systèmes d'injection comprend aussi une vanne de décharge et un doseur de carburant, représentés par le bloc 64 et destinés à réguler le débit en direction de la chambre de combustion 2.

La vanne de décharge et le doseur de carburant 64 sont conçus pour rediriger un excès de carburant dans le circuit d'alimentation 60 vers le circuit amont 100, à travers une boucle de recirculation 610 de carburant.

Le débit de carburant en sortie de la pompe volumétrique haute pression 102 est, de manière connue, supérieur au débit nécessaire pour approvisionner les systèmes d'injection 62, quelle que soit la phase concernée du vol de la turbomachine 1. La boucle de recirculation 610 est destinée à faire circuler l'excès de carburant depuis un premier noeud A, situé en aval du noeud d'entrée E, et un noeud d'évacuation B.

Le noeud d'évacuation B est situé entre le groupe de pompage basse pression 101 et la pompe volumétrique haute pression 102. Dans le premier mode de réalisation, il est situé entre le groupe de pompage basse pression 101 et la résistance hydraulique 104, et il est situé en aval de l'entrée F de la branche de recirculation 70.

Cette recirculation de carburant le réchauffe. Néanmoins, le débit recirculé dans la boucle de recirculation 610 dépend notamment des besoins en carburant des injecteurs 62 et non pas de la température souhaitée du carburant, contrairement au débit de carburant dans la branche de recirculation 70 qui quant à lui est régulé spécifiquement de façon à pouvoir contrôler le réchauffage du carburant.

Le circuit d'alimentation 50 des géométries variables est configuré pour acheminer du fluide à travers des géométries variables 54.

Les géométries variables 54 sont des équipements de la turbomachine 1 qui nécessitent de prélever une puissance hydraulique pour fonctionner. Les géométries variables 54 peuvent être de natures diverses, par exemple un vérin, une servovalve, une vanne de décharge ajustable de compresseur, une vanne de décharge transitoire de compresseur, et/ou une vanne de réglage de débit d'air pour un système de réglage de jeu au sommet d'aubes de rotor pour turbine basse pression ou turbine haute pression.

Le circuit d'alimentation des géométries variables 50 s'étend entre le noeud d'entrée E et un noeud de sortie S qui raccorde le circuit d'alimentation 50 des géométries variables au circuit amont 100.

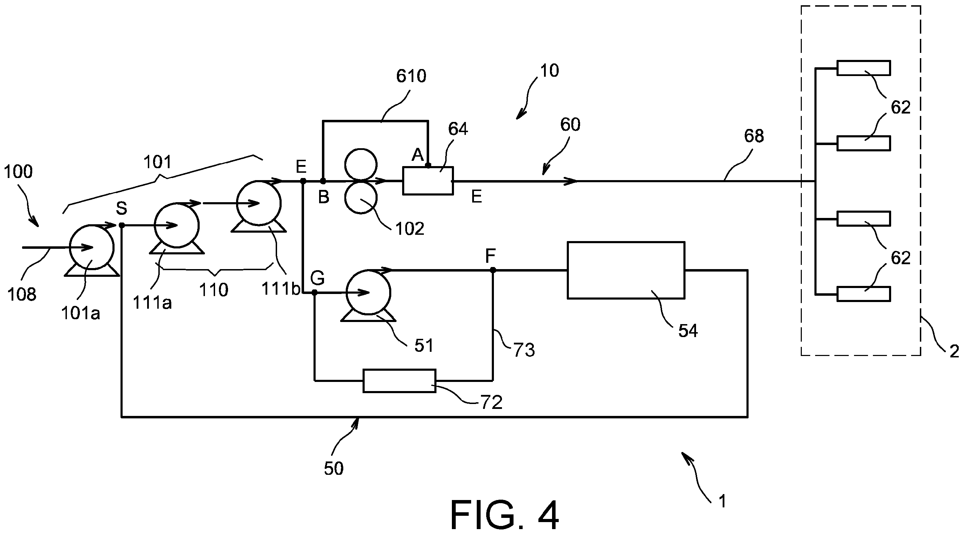

Dans les modes de réalisation en référence aux figures 1 à 4, le noeud de sortie S du système d'alimentation 10 est situé entre deux pompes 101a, 111a du groupe de pompage basse pression 101. Plus précisément, le noeud de sortie S se trouve entre un bloc de pompage amont 101a comprenant une pompe centrifuge et un bloc de pompage aval 110 comprenant deux pompes centrifuges 111a, 111b.

La position du noeud de sortie S est déterminée en fonction de la pression souhaitée en sortie des géométries variables 54, de manière à obtenir un différentiel de pression suffisant aux bornes des géométries variables pour assurer leur commande, sans toutefois risquer de vaporiser le carburant à cause d'une pression trop basse du carburant au noeud de sortie S.

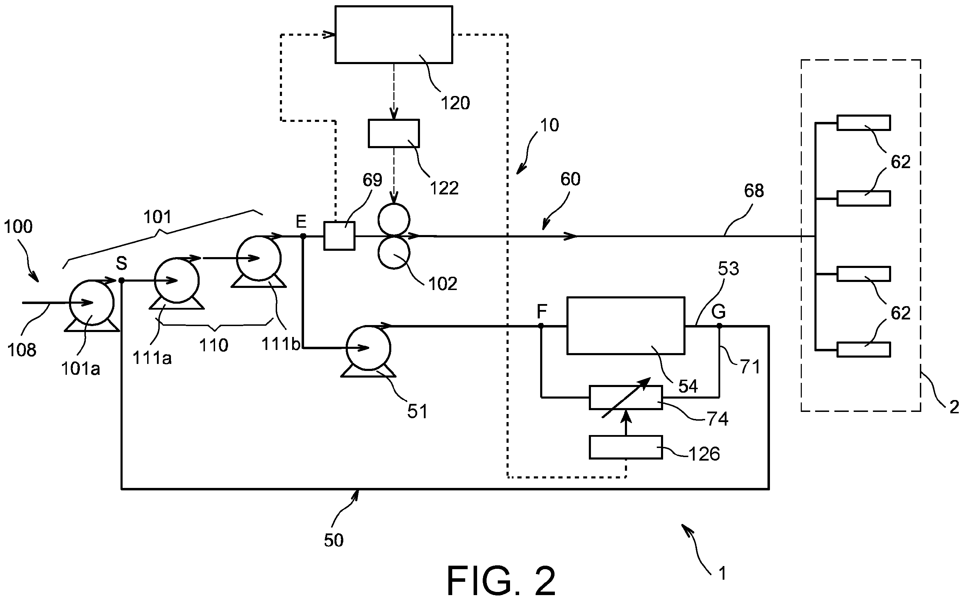

Les systèmes d'alimentation 10 représentés aux figures 2 à 4 se distinguent principalement de celui de la figure 1 en ce que le circuit amont 100 est dépourvu de pompe volumétrique haute pression et en ce que le circuit aval 50, 60 comprend la pompe volumétrique haute pression 102.

Le noeud E de séparation du circuit d'alimentation des géométries variables 50 et du circuit d'alimentation du système d'injection 60 est notamment situé entre le groupe de pompage basse pression 101 et la pompe volumétrique 102.

La pompe volumétrique haute pression 102 fait partie du circuit 60 d'alimentation des systèmes d'injection, ce qui permet de diminuer le débit de carburant fourni par la pompe volumétrique 102. Les pertes thermiques du système d'alimentation 10 sont alors réduites.

Le circuit d'alimentation des géométries variables 50 est dépourvu de pompe volumétrique 102. Il comprend un groupe de pompage complémentaire 51 comprenant au moins une une pompe centrifuge.

Le groupe de pompage complémentaire 51 permet d'atteindre un niveau de pression suffisant dans le circuit d'alimentation 50 des géométries variables, afin de toujours dépasser le différentiel de pression minimum requis aux bornes des géométries variables pour assurer leur commande en toutes circonstances. Il permet de répondre à un besoin en débit ponctuel important des géométries variables 54, par exemple lors d'un déplacement de vérin d'actionneur hydraulique.

Le groupe de pompage basse pression 101 et le groupe de pompage complémentaire 51 forment un ensemble de pompage cinétique du système d'alimentation 10, en ce sens que toutes les pompes de cet ensemble fonctionnent par pompage cinétique.

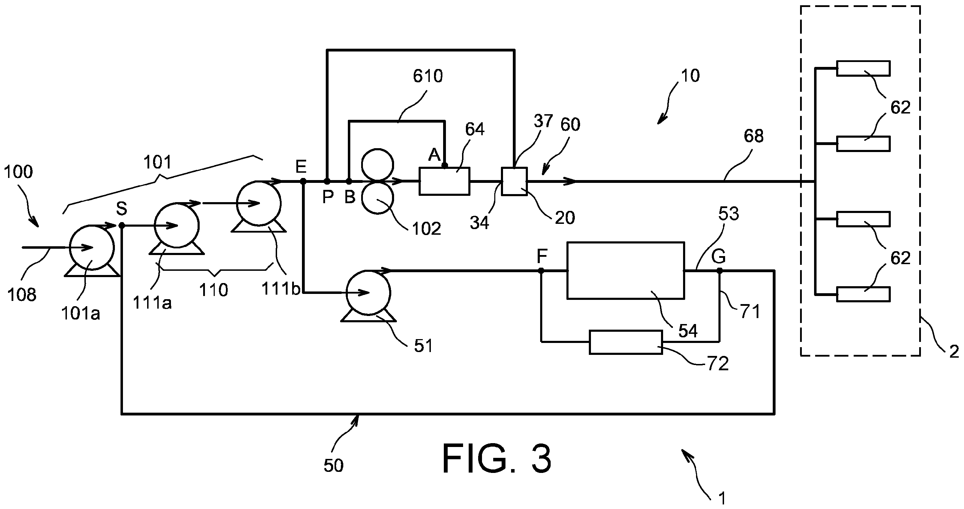

Dans le deuxième et le troisième mode de réalisation, correspondant respectivement aux figures 2 et 3, le système d'alimentation 10 comprend une branche de recirculation 71 ayant son entrée F située entre au moins une pompe centrifuge, dite première pompe centrifuge dans la présente, du groupe de pompage complémentaire 51 et les géométries variables 54. La sortie G de la branche de recirculation 71 est située en aval des géométries variables 54, sur une conduite du circuit d'alimentation 50 des géométries variables qui aboutit au noeud de sortie S, lequel noeud de sortie raccorde la conduite au circuit amont 100.

La vanne 72 est alors située dans la branche de recirculation 71 entre l'entrée F et la sortie G, en dérivation des géométries variables 54. Les géométries variables 54 sont situées dans une branche principale 53 du circuit d'alimentation des géométries variables 50 entre le noeud E et le noeud de sortie S.

La vanne 72 comprend également au moins un élément choisi parmi un clapet anti-retour, une soupape, une fourrure et un tiroir. La position de l'obturateur de la vanne 72 peut notamment être configurée pour varier parmi une pluralité de positions stables intermédiaires entre une position extrême d'ouverture et une position extrême de fermeture de l'obturateur.

En référence spécifiquement à la figure 2, l'ouverture/la fermeture de l'obturateur est commandée par un système électronique de régulation 120 via un module électronique de régulation 126, en fonction de la température du carburant.

La mesure de la température du carburant prise en compte par le système électronique de régulation 120 est par exemple effectuée au niveau d'un capteur de température 69 situé au niveau du noeud d'entrée E.

Il est également possible de ne pas avoir de capteur de température 69 dédié, et de se servir d'un capteur de température existant dédié à la mesure de la température ambiante en exploitant ses données à l'aide d'un modèle. Ce modèle associe la température ambiante à une température estimée du carburant. Il est encore également possible d'utiliser un capteur de température d'huile, car la température de l'huile est directement liée à celle du carburant du fait de l'échangeur huile/carburant.

De plus, la pompe volumétrique 102 est actionnée ici par un moteur électrique, au lieu d'être entraînée par une liaison cinématique à un arbre moteur de la turbomachine, ce qui permet un dosage précis du carburant délivré par la pompe en contrôlant la vitesse du moteur électrique d'entrainement de la pompe. Cela permet de se passer d'un doseur en aval de la pompe, tel que le doseur 64 décrit précédemment dans le premier mode de réalisation. Le moteur électrique d'actionnement de la pompe volumétrique 102 est commandé par le système électronique de régulation à pleine autorité 120 de la turbomachine, également connu sous le nom de « FADEC » ou « Full Authority Digital Engine Control » via un module électronique de régulation 122.

De manière classique, ce système électronique de régulation 120 comprend un calculateur moteur à deux voies symétriques, redondantes et à pleine autorité. Le calculateur moteur est destiné à prendre en compte de nombreux paramètres pour commander le débit délivré par la pompe volumétrique haute pression 102, comme par exemple : une commande d'un pilote de l'aéronef, la vitesse de rotation du corps haute pression de turbomachine 1 et une mesure de débit en direction des systèmes d'injections 62.

Les modules électroniques de régulation 122, 126 sont également connus sous le nom d'ECU, de l'anglais « electronic control unit ». Ils peuvent éventuellement être confondus.

La boucle de recirculation de carburant 610 décrite précédemment dans le premier mode de réalisation n'a plus d'utilité puisqu'on a supprimé le doseur en aval de la pompe. Par rapport au premier mode de réalisation, il en découle un gain de masse du système d'alimentation 10, ainsi qu'une suppression des pertes thermiques générées par la recirculation du carburant dans la boucle de recirculation 610.

La faible puissance fournie par la pompe volumétrique haute pression 102 au sein du circuit d'alimentation de système d'injection 60 permet de commander la pompe volumétrique électrique 102 sans avoir recours à de l'électronique de puissance massive.

Le mode de réalisation de la figure 3 se distingue de celui de la figure 2 en ce que la vanne 72 de la branche de recirculation 71 est une vanne passive, comme celle du premier mode de réalisation.

L'obturateur de la vanne 72 s'ouvre automatiquement lorsque la température du carburant dans la branche de recirculation 71 est inférieure à la valeur seuil So. Il se ferme automatiquement lorsque la température du carburant dans la branche de recirculation 71 est supérieure à la valeur seuil So.

De plus, la pompe volumétrique 102 est une pompe volumétrique à entraînement mécanique, c'est-à-dire par un arbre moteur de la turbomachine, comme dans le premier mode de réalisation. Par conséquent, le système d'alimentation comprend également une boucle de recirculation 610 entre un premier noeud A qui est situé en aval de la pompe volumétrique 102 et un noeud d'évacuation B qui est situé en amont de la pompe volumétrique 102.

Enfin, le système d'alimentation du troisième mode de réalisation comporte un régulateur de pertes de charges 20.

Le régulateur de pertes de charge 20 est situé en aval de la pompe haute pression 102. Il permet que la pression en aval de la pompe haute pression 102 soit supérieure à la pression en amont de la pompe haute pression 102. L'ensemble de pompage basse pression 101 peut ainsi augmenter davantage la pression du fluide qui le traverse, ce qui permet de réduire encore le travail de la pompe haute pression 102. Il en découle une diminution accrue des pertes thermiques dans le système d'alimentation 10.

Le régulateur de pertes de charge 20 maintient une différence de pression strictement positive entre la sortie et l'entrée de la pompe volumétrique haute pression 102.

Il régule la perte de charge dans le circuit d'alimentation 60 des systèmes d'injection en fonction de la différence de pression entre son entrée basse pression 37 et son entrée haute pression 34. L'entrée basse pression 37 est située en amont de la pompe volumétrique 102. Elle est raccordée à un noeud P qui est situé ici en amont du noeud d'évacuation B, une disposition du noeud P en aval du noeud d'évacuation B étant également possible. L'entrée haute pression 34 est située en aval du doseur 64.

Le quatrième mode de réalisation se distingue du troisième mode de réalisation par la position de la sortie G de la branche de recirculation 73. Cette sortie G est située entre le groupe de pompage basse pression 101 et le groupe de pompage complémentaire 51.

La vanne 72 de la branche de recirculation 73 est une vanne passive qui est identique à celle du premier et du troisième mode de réalisation.

La branche de recirculation 73 est destinée à recirculer du carburant à travers le groupe de pompage complémentaire 51 seulement.

Le système d'alimentation 10 du quatrième mode de réalisation ne comporte aucun régulateur de perte de charges 20, contrairement à celui du troisième mode de réalisation.

Bien entendu, diverses modifications peuvent être apportées par l'homme du métier à l'invention qui vient d'être décrite sans sortir du cadre de l'exposé de l'invention.

En particulier, dans les modes de réalisation des figures 2 à 4, l'entrée F de la branche de recirculation peut être située entre le groupe de pompage basse pression 101 et la pompe volumétrique 102. Par ailleurs, cette entrée F pourrait être située entre deux pompes du groupe de pompage basse pression 101.

Dans les modes de réalisation représentés aux figures 2 et 3, la sortie G de la branche de recirculation 71est située sur une conduite du circuit d'alimentation 50 des géométries variables qui aboutit au noeud de sortie S de ce circuit d'alimentation des géométries variables. Cependant, cette sortie G pourrait également être située entre deux pompes du groupe de pompage basse pression 101, voire en amont de ce groupe 101.

L'obturateur de la vanne 74 du deuxième mode de réalisation peut tout à fait ne comporter que deux positions stables, une position extrême d'ouverture et une position extrême de fermeture.

Par ailleurs, la vanne 74 du deuxième mode de réalisation peut être commandée par le système électronique de régulation 120 via le même module électronique de régulation que celui pour commander la pompe volumétrique électrique 102.

De manière générale, le groupe de pompage basse pression 101 comprend une pluralité de pompes centrifuges en série. Le nombre de pompes centrifuges du groupe de pompage basse pression 101 peut varier en fonction des besoins en puissance hydraulique et en débit de fluide de la turbomachine 1. De même, les pompes du groupe de pompage basse pression 101 ne sont pas nécessairement identiques.

Le groupe de pompage basse pression 101 peut aussi comporter une résistance hydraulique 104 entre ses pompes centrifuges.

Le groupe de pompage complémentaire 51 peut comporter plusieurs pompes centrifuges en série. Dans ce cas, l'entrée F de la branche de recirculation est située entre au moins une des pompes du groupe de pompage complémentaire 51 dite première pompe centrifuge et une des géométries variables 54.

Les pompes centrifuges du groupe de pompage complémentaire 51 ne sont pas nécessairement identiques entre elles.

En variante encore, le groupe de pompage complémentaire 51 peut n'alimenter en fluide que certaines des géométries variables 54 de la turbomachine.

Dans le premier mode de réalisation, le noeud B est situé entre le groupe de pompage basse pression 101 et la résistance hydraulique. Il pourrait être situé entre la résistance hydraulique 104 et la pompe volumétrique 102. Dans tous les cas, il est situé en amont de la pompe volumétrique 102.

Il est tout à fait envisageable que le circuit d'alimentation de système d'injection 60 du quatrième mode de réalisation soit identique à celui du troisième mode de réalisation. Il comprendrait alors un régulateur de pertes de charges 20.

## Revendications

1. Système d'alimentation (10) de turbomachine en fluide, le système d'alimentation (10) comprenant au moins trois pompes centrifuges (101a, 111a, 111b, 51) en série, et une pompe volumétrique (102) située en aval d'au moins une des pompes centrifuges (101a, 111a, 111b) et configurée pour alimenter en fluide un système d'injection (62),
le système d'alimentation (10) comprenant un groupe de pompage basse pression (101) comprenant au moins deux des pompes centrifuges en séries (101a, 111a, 111b), le groupe de pompage basse pression (101) étant situé en amont de la pompe volumétrique (102) de manière à alimenter la pompe volumétrique (102) en fluide,
le système d'alimentation (10) se subdivisant à un noeud d'entrée (E), situé en aval du groupe de pompage basse pression (101), en un circuit d'alimentation de système d'injection (60) et en un circuit d'alimentation des géométries variables (50),
le circuit d'alimentation de système d'injection (60) comprenant la pompe volumétrique (102) et étant configuré pour alimenter en fluide le système d'injection (62),
**caractérisé en ce que** le circuit d'alimentation des géométries variables (50) comprend un groupe de pompage complémentaire (51) comprenant au moins une desdites trois pompes centrifuges dite première pompe centrifuge (51) et des géométries variables (54) en aval de la première pompe centrifuge (51), et le système d'alimentation (10) comprend une branche de recirculation de fluide (71, 73) qui comporte :
une entrée (F) située entre la première pompe centrifuge (51) et les géométries variables (54),
une sortie (G) située en amont de la première pompe centrifuge (51), ou en aval des géométries variables (54) et en communication fluidique avec un noeud de sortie (S) du circuit d'alimentation de géométries variables (50), le noeud de sortie (S) étant situé en amont de la première pompe centrifuge (51), de façon à ce qu'au moins une partie du fluide transitant dans la branche de recirculation (71, 73) recircule dans la première pompe centrifuge (51), et
une vanne (72, 74) située entre l'entrée (F) et la sortie (G) de la branche de recirculation de fluide, la vanne (72, 74) comprenant un obturateur configuré pour s'ouvrir/se fermer en fonction de la température du fluide.

2. Système d'alimentation (10) selon la revendication 1, dans lequel le groupe de pompage basse pression (101) et le circuit d'alimentation des géométries variables (50) sont dépourvus de pompe volumétrique (102).

3. Système d'alimentation (10) selon l'une quelconque des revendications 1 et 2, dans lequel le noeud de sortie (S) est situé entre deux pompes (101a, 111a, 111b) du groupe de pompage basse pression (101) ou en amont du groupe de pompage basse pression (101).

4. Système d'alimentation (10) selon l'une quelconque des revendications 1 à 3, dans lequel le noeud de sortie (S) de la branche de recirculation de fluide (73) est située entre le groupe de pompage basse pression (101) et la première pompe centrifuge (51), ou à la fois en aval du groupe de pompage basse pression (101) et en amont de la pompe volumétrique (102).

5. Système d'alimentation (10) selon l'une quelconque des revendications précédentes, dans lequel la vanne (72, 74) comprend au moins un élément choisi parmi un clapet anti-retour, une soupape, une fourrure et un tiroir.

6. Système d'alimentation (10) selon l'une quelconque des revendications précédentes,
dans lequel l'ouverture et/ou la fermeture de l'obturateur de la vanne (74) est commandée par un système électronique de régulation (120, 126) de turbomachine, ou bien
dans lequel la vanne (72) est configurée de manière à ce que l'obturateur se ferme automatiquement si la température du fluide traversant la vanne (72) dépasse une valeur seuil (So).

7. Système d'alimentation (10) selon l'une quelconque des revendications précédentes, dans lequel l'obturateur de la vanne (72) comprend seulement deux positions stables, une position extrême d'ouverture dans laquelle la vanne (72) laisse circuler du fluide dans la branche de recirculation (71, 73) et une position extrême de fermeture dans laquelle la vanne (72) empêche la circulation de fluide dans la branche de recirculation (71, 73).

8. Turbomachine (1) comprenant un système d'alimentation (10) en fluide, selon l'une quelconque des revendications précédentes.

## Patentansprüche

1. Versorgungssystem (10) von Turbomaschinen mit Fluid, wobei das Versorgungssystem (10) mindestens drei Kreiselpumpen (101a, 111a, 111b, 51) in Reihe sowie eine Verdrängerpumpe (102), die sich in Strömungsrichtung hinter mindestens einer der Kreiselpumpen (101a, 111a, 111b) befindet und dazu konzipiert ist, ein Einspritzsystem (62) mit Fluid zu versorgen, aufweist,
wobei das Versorgungssystem (10) eine Niederdruck-Pumpgruppe (101) mit mindestens zwei der Kreiselpumpen in Reihe (101a, 111a, 111b) umfasst, wobei die Niederdruck-Pumpgruppe (101) sich in Strömungsrichtung vor der Verdrängerpumpe (102) befindet, so dass sie die Verdrängerpumpe (102) mit Fluid versorgt,
wobei das Versorgungssystem (10) sich an einem Einlass-Knoten (E), der sich in Strömungsrichtung hinter der Niederdruck-Pumpgruppe (101) befindet, in einen Einspritzsystem-Versorgungskreis (60) und einen Versorgungskreis für variable Geometrien (50) aufteilt,
wobei der Einspritzsystem-Versorgungskreis (60) die Verdrängerpumpe (102) enthält und dazu konzipiert ist, das Einspritzsystem (62) mit Fluid zu versorgen,
**dadurch gekennzeichnet,**
**dass** der Versorgungskreis für variable Geometrien (50) eine komplementäre Pumpgruppe (51) enthält, die mindestens eine der genannten drei Kreiselpumpen, genannt erste Kreiselpumpe (51), sowie variable Geometrien (54) in Strömungsrichtung hinter der ersten Kreiselpumpe (51) umfasst, und das Versorgungssystem (10) eine Fluid-Rückführungsleitung (71, 73) enthält, die aufweist:
einen Einlass (F), der sich zwischen der ersten Kreiselpumpe (51) und den variablen Geometrien (54) befindet,
einen Auslass (G), der sich in Strömungsrichtung vor der ersten Kreiselpumpe (51) oder hinter den variablen Geometrien (54) befindet und in Fluid-Verbindung mit einem Auslass-Knoten (S) des Versorgungskreises für variable Geometrien (50) steht, wobei sich der Auslass-Knoten (S) in Strömungsrichtung vor der ersten Kreiselpumpe (51) befindet, dergestalt dass mindestens ein Teil des Fluids, das sich in der Fluid-Rückführungsleitung (71, 73) befindet, in die erste Kreiselpumpe (51) zurückfließt, und
ein Ventil (72, 74), das sich zwischen dem Einlass (F) und dem Auslass (G) der Fluid-Rückführungsleitung befindet, wobei das Ventil (72, 74) einen Verschluss aufweist, der dazu konzipiert ist, sich in Abhängigkeit von der Temperatur des Fluids zu öffnen/zu schließen.

2. Versorgungssystem (10) nach Anspruch 1, bei dem die Niederdruck-Pumpgruppe (101) und der Versorgungskreis für variable Geometrien (50) keine Verdrängerpumpe (102) aufweisen.

3. Versorgungssystem (10) nach einem der Ansprüche 1 und 2, bei dem sich der Auslass-Knoten (S) zwischen zwei Pumpen (101a, 111a, 111b) der Niederdruck-Pumpgruppe (101) oder in Strömungsrichtung vor der Niederdruck-Pumpgruppe (101) befindet.

4. Versorgungssystem (10) nach einem der Ansprüche 1 bis 3, bei dem sich der Auslass-Knoten (S) der Fluid-Rückführungsleitung (73) zwischen der Niederdruck-Pumpgruppe (101) und der ersten Kreiselpumpe (51) oder in Strömungsrichtung hinter der Niederdruck-Pumpgruppe (101) und zugleich in Strömungsrichtung vor der Verdrängerpumpe (102) befindet.

5. Versorgungssystem (10) nach einem der vorherigen Ansprüche, bei dem das Ventil (72, 74) mindestens ein Element umfasst, das unter einem Rückschlagventil, einer Ventilklappe, einem Stopfen und einem Schieber gewählt ist.

6. Versorgungssystem (10) nach einem der vorherigen Ansprüche,
bei dem das Öffnen und/oder das Schließen des Verschlusses des Ventils (74) durch ein elektronisches Regelsystem (120, 126) der Turbomaschine gesteuert wird, oder
bei dem das Ventil (72) dergestalt konzipiert ist, dass sich der Verschluss automatisch schließt, wenn die Temperatur des Fluids, das durch das Ventil (72) strömt, einen Schwellenwert (S₀) überschreitet.

7. Versorgungssystem (10) nach einem der vorherigen Ansprüche, bei dem der Verschluss des Ventils (72) nur zwei stabile Stellungen besitzt, eine maximale Öffnungsstellung, in der das Ventil (72) das Fluid in die Fluid-Rückführungsleitung (71, 73) strömen lässt, und eine maximale Schließstellung, in der das Ventil (72) verhindert, dass das Fluid in die Fluid-Rückführungsleitung (71, 73) strömt.

8. Turbomaschine (1), die ein Fluid-Versorgungssystem (10) nach einem der vorherigen Ansprüche aufweist.

## Claims

1. A supply system (10) for supplying a turbomachine with fluid, the supply system (10) comprising at least three centrifugal pumps (101a, 111a, 111b, 51) in series, and a displacement pump (102) located downstream of at least one of the centrifugal pumps (101a, 111a, 111b) and configured to supply an injection system (62) with fluid,
the supply system (10) comprising a low pressure pump unit (101) comprising at least two of said centrifugal pumps in series (101a, 111a, 111b), the low pressure pump unit (101) being located upstream of the displacement pump (102) so as to supply the displacement pump (102) with fluid,
the supply system (10) being subdivided at an inlet node (E), located downstream of the low pressure pump unit (101), into an injection system supply circuit (60) and a variable geometry supply circuit (50),
the injection system supply circuit (60) comprising the displacement pump (102) and being configured to supply the injection system (62) with fluid,
**characterised in that** the variable geometry supply circuit (50) comprises a complementary pump unit (51) comprising at least one centrifugal pump among said at least three centrifugal pumps, called a first centrifugal pump (51), and variable geometries (54) downstream of the first centrifugal pump (51), and the supply system (10) comprises a fluid recirculation branch (71, 73) which includes:
an inlet (F) located between the first centrifugal pump (51) and the variable geometries (54),
an outlet (G) located upstream of the first centrifugal pump (51), or downstream of the variable geometries (54) and in fluid communication with an outlet node (S) of the variable geometry supply circuit (50), the outlet node (S) being located upstream of the first centrifugal pump (51), such that at least one part of the fluid passing through the recirculation branch (71, 73) recirculates in the first centrifugal pump (51), and
a vane (72, 74) located between the inlet (F) and the outlet (G) of the fluid recirculation branch, the vane (72, 74) comprising a obturator configured to open/close as a function of the fluid temperature.

2. The supply system (10) according to claim 1, wherein the low pressure pump unit (101) and the variable geometry supply circuit (50) does not comprise any displacement pump (102).

3. The supply system (10) according to any of claims 1 and 2, wherein the outlet node (S) is located between two pumps (101a, 111a, 111b) of the low pressure pump unit (101) or upstream of the low pressure pump unit (101).

4. The supply system (10) according to any of claims 1 to 3, wherein the outlet node (S) of the fluid recirculation branch (73) is located between the low pressure pump unit (101) and the first centrifugal pump (51), or both downstream of the low pressure pump unit (101) and upstream of the displacement pump (102).

5. The supply system (10) according to any of the preceding claims, wherein the vane (72, 74) comprises at least one element chosen from a check valve, a valve, a packing and a slide valve.

6. The supply system (10) according to any of the preceding claims,
wherein opening and/or closing the obturator of the vane (74) is controlled by an electronic regulation system (120, 126) of a turbomachine, or
wherein the vane (72) is configured such that the obturator is automatically closed if the temperature of the fluid passing through the vane (72) exceeds a threshold value (So).

7. The supply system (10) according to any of the preceding claims, wherein the obturator of the vane (72) comprises only two stable positions, an opening end position in which the vane (72) lets fluid circulate in the recirculation branch (71, 73) and a closing end position in which the vane (72) prevents fluid from circulating in the recirculation branch (71, 73).

8. A turbomachine (1) comprising a fluid supply system (10), according to any of the preceding claims.
